# EUROPEAN PATENT SPECIFICATION

(11) **EP 2 769 903 B1**
(45) Date of publication and mention of the grant of the patent: **29.03.2017**
(21) Application number: 14155324.8
(22) Date of filing: 17.02.2014
(51) Int. Cl.: B62K 19/40, B62K 19/30, B62J 9/00, B60L 11/18, B60R 16/04

(54) **Battery layout structure of saddle-ride type vehicle**
Batterieanordnungsstruktur eines Sattelfahrzeugs
Structure de dispositif de batterie d'un véhicule à monture de selle

(30) Priority: 25.02.2013 JP 2013034397; 10.04.2013 JP 2013081942
(43) Date of publication of application: 27.08.2014
(73) Proprietor: Honda Motor Co., Ltd., Tokyo 107-8556 (JP)
(72) Inventor: Takizawa, Kota, Saitama, 351-0193 (JP); Horiuchi, Tetsu, SAITAMA, 351-0193 (JP)
(74) Representative: Ahner, Philippe

(56) References cited:
- CN-U- 201 478 369
- CN-U- 201 800 825
- JP-A- H01 160 788
- US-A1- 2006 139 939
- US-A1- 2012 263 997

## Description

### [Technical Field]

The present invention relates to battery layout structure of a saddle-ride type vehicle.

### [Background Art]

Heretofore, a saddle-ride type vehicle where a battery is provided in front of a head pipe inside a front cover that covers the head pipe and a terminal of the battery is arranged on a top face of the battery is known (for example, refer to a patent literature 1).

### [Citation List]

### [Patent literature]

[Patent Literature 1] JP-A No. 2011-184001

The document CN 201 800 825 U represents the closest prior art, and discloses a layout structure of a saddle-ride type vehicle having all the features of the preamble of claim 1.

### [Summary of Invention]

### [Technical Problem]

However, in the conventional type battery layout structure, as the terminal of the battery is arranged on the top face of the battery, space is required to be provided among the top face of the battery, an accessory and a component in consideration of the detachment/attachment of the terminal and the inhibition of interference and it is difficult to effectively utilize the space on the upside of the battery.

The present invention is made in view of the above-mentioned situation and an object of the present invention is to enable effectively utilizing space on the upside of a battery in a layout structure of a saddle-ride type vehicle.

### [Solution to Problem]

To settle the above-mentioned problem, the present invention is based upon a layout structure of a saddle-ride type vehicle provided with a head pipe (12) that forms the front of a body frame (11) and steerably journals a front wheel (33), a fore cover (60) that covers a circumference of the head pipe (12) and a battery (88) provided in front of the head pipe (12) and inside the fore cover (60), and has a characteristic that the battery (88) is arranged so that battery terminals (91a, 91b) face forward.

According to the present invention, as the battery is arranged so that the battery terminals provided in front of the head pipe and inside the fore cover face forward and the battery terminals are attached/detached from the front side, configuration space on the upside of the battery is not restricted by the detachability of the battery terminals. Therefore, the space on the upside of the battery can be effectively utilized.

Besides, the present invention has a characteristic that the battery (88) is formed in a rectangular parallelopiped so that a bottom face (88a) has the largest area and a battery stay (85) which is provided to the head pipe (12) and which supports the bottom face (88a) and the bottom face (88a) of the battery (88) are formed in substantial parallel.

According to the present invention, the bottom face having the largest area of the battery can be supported by the battery stay and rigidity for supporting the battery can be increased.

In addition, the present invention has a characteristic that the battery terminals (91a, 91b) are formed in an upper part of the battery (88).

According to the present invention, as the battery terminals are formed in the upper part of the battery, the workability for detaching of the battery terminal is satisfactory.

Further, the present invention has a characteristic that the battery (88) is supported by a battery surrounding stay (86) that covers a circumference of the battery (88) and a lamp (74) is fixed to the battery surrounding stay (86).

According to the present invention, a degree of freedom in a shape of the battery surrounding stay can be enhanced utilizing the configuration space secured on the upside of the battery and the lamp can be fixed to the battery surrounding stay. Therefore, a stay and others dedicated to the lamp are not required and the number of parts can be reduced.

Furthermore, the present invention has a characteristic that a fuse box (125) is arranged immediately above a top face (88b) of the battery (88).

According to the present invention, the fuse box can be also easily maintained in accordance with the maintenance of the battery.

Furthermore, the present invention has a characteristic that a brake hose (127c) and a seat locking cable (128b) for opening/closing a seat (46) for an occupant are arranged on the upside of the battery (88).

According to the present invention, the brake hose and the seat locking cable can be reduced.

Further, the present invention has a characteristic that a resin battery box (87) which houses the battery (88) is provided inside the battery surrounding stay (86), the plus terminal (91a) of the battery terminals (91a, 91b) is arranged in a corner of a front face of the battery (88) on one side in a vertical direction and a protruded wall (115) protruded forward is formed in a part of the battery box adjacent to a corner of the battery (88) on the other side in the vertical direction.

According to the present invention, as the resin battery box that houses the battery is provided inside the battery surrounding stay, the plus terminal of the battery terminals is arranged in the corner of the front face of the battery on one side in the vertical direction and the protruded wall protruded forward is formed in the part of the battery box adjacent to the corner of the battery on the other side in the vertical direction, the protruded wall obstructs when the insertion in the reverse direction of the battery is tried. Therefore, the wrong assembly of the battery can be prevented with simple configuration.

Furthermore, the present invention has a characteristic that the battery stay (85) is provided with a part (96) extended in a direction of vehicle width, the part (96) extended in the direction of vehicle width supports at least a part in a direction of vehicle width of a bottom face (88a) of the battery (88) and an accessory (126) is fixed to the side of its free end.

According to the present invention, as the battery stay is provided with the part extended in the direction of vehicle width, the part extended in the direction of vehicle width supports at least a part in the direction of vehicle width of the bottom face of the battery and the accessory is fixed to the side of its free end, rigidity for supporting the battery can be increased utilizing the part extended in the direction of vehicle width that supports the accessory and the number of parts can be reduced.

Furthermore, the present invention has a characteristic that stays (12a, 12b) which are provided to the head pipe (12) and which support the battery (88) are arranged with the stays apart in a vertical direction of the battery (88) and in a side view, the battery (88) is arranged in a state in which the battery crosses an imaginary line (I) that connects front ends of the upper and lower stays (12a, 12b).

According to the present invention, the battery can be arranged close to the head pipe, the fore cover can be compactified, the center of gravity of the vehicle can be brought close to the central side, and maneuverability can be enhanced.

### [Advantageous Effects of Invention]

In the layout structure of the saddle-ride type vehicle according to the present invention, as the configuration space on the upside of the battery is not restricted by the detachability of the battery terminal, the space on the upside of the battery can be effectively utilized.

Besides, the bottom face having the largest area of the battery can be supported by the battery stay and the rigidity for supporting the battery can be increased.

In addition, as the battery terminal is formed in the upper part of the battery, workability for detaching the battery terminal is satisfactory.

Further, the lamp can be fixed to the battery surrounding stay and the number of parts can be reduced.

Furthermore, the fuse box can be also easily maintained together with the maintenance of the battery.

Furthermore, the brake hose and the seat locking cable can be reduced.

Further, as the protruded wall obstructs when the insertion in the reverse direction of the battery is tried, the wrong assembly of the battery can be prevented with the simple configuration.

Furthermore, the rigidity for supporting the battery can be increased utilizing the part extended in the direction of vehicle width that supports the accessory and the number of parts can be reduced.

Furthermore, the fore cover can be compactified, the center of gravity of the vehicle can be brought close to the central side, and maneuverability can be enhanced.

### [Brief Description of Drawings]

[Fig. 1] Fig. 1 is a left side view showing a motorcycle provided with battery layout structure equivalent to en embodiment of the present invention;
[Fig. 2] Fig. 2 is a front view showing the front of the vehicle viewed from the front side;
[Fig. 3] Fig. 3 is a sectional view taken along line III-III in Fig. 2;
[Fig. 4] Fig. 4 is a front view showing structure inside a fore cover;
[Fig. 5] Fig. 5 is a right side view showing a state in which a battery support is attached to a head pipe;
[Fig. 6] Fig. 6 is a front view showing only the battery support;
[Fig. 7] Fig. 7 is a plan showing the battery support viewed from the upside;
[Fig. 8] Fig. 8 is a front view showing a state in which the battery support is attached to the head pipe;
[Fig. 9] Fig. 9 is a sectional view taken along line IX-IX in Fig. 8;
[Fig. 10] Fig. 10 is a perspective view showing the structure inside the fore cover;
[Fig. 11] Fig. 11 is a perspective view showing the structure inside the fore cover; and
[Fig. 12] Fig. 12 is a front view showing the structure inside the fore cover.

### [Description of Embodiments]

Referring to the drawings, one embodiment of the present invention will be described below. In its description, a direction such as a longitudinal direction, a lateral direction and a vertical direction shall be the same as a direction in a vehicle body unless otherwise provided. Besides, a reference sign FR in each drawing denotes the front side of the vehicle body, UP denotes the upside of the vehicle body, and LE denotes the left side of the vehicle body.

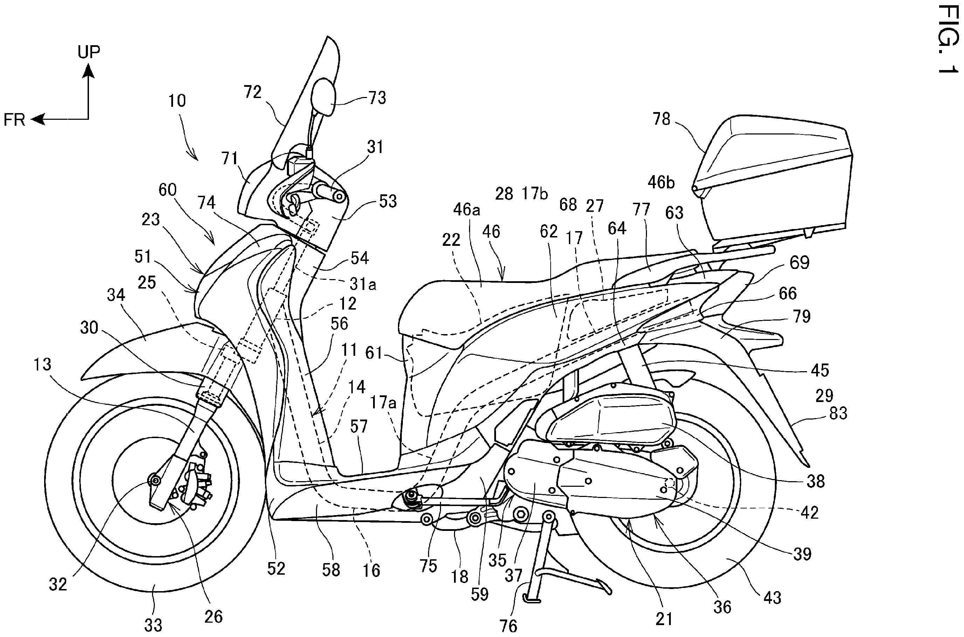

Fig. 1 is a left side view showing a motorcycle 10 provided with battery layout structure equivalent to the embodiment of the present invention.

The motorcycle 10 is a scooter-type saddle-ride type vehicle provided with a low deck floor step 57 for an occupant seated on a seat 46 to put his/her feet, a front wheel 33 is provided in front of a body frame 11, and a rear wheel 43 which is a driving wheel is journaled to a unit swing type power unit 21 coupled to the rear of the body frame 11.

In the motorcycle 10, a front fork 13 is steerably attached to a head pipe 12 that forms a front end of the body frame 11, the power unit 21 is vertically swingably attached to a rear end in a lower part of a lower frame 16 that forms a lower part of the body frame 11 via a link 18, and a housing box 22 is attached to a rear frame 17 that forms the rear of the body frame 11.

The body frame 11 is provided with the head pipe 12, a down frame 14 extended downward and diagonally backward from the head pipe 12, a pair of right and left lower frames 16 (only the lower frame 16 on this side is shown) extended backward after they are laterally extended from a lower end of the down frame 14 and a pair of right and left rear frames 17 (only the rear frame 17 on this side is shown) integrally extended backward and diagonally upward from rear ends of these lower frames 16, and most of the body frame 11 is covered with a body cover 23. Each rear frame 17 is provided with the front part 17a of the rear frame extended backward on the downside of the seat 46 with the rear higher and the rear part 17b of the rear frame extended backward and upward at a gentler inclination than the front part 17a of the rear frame.

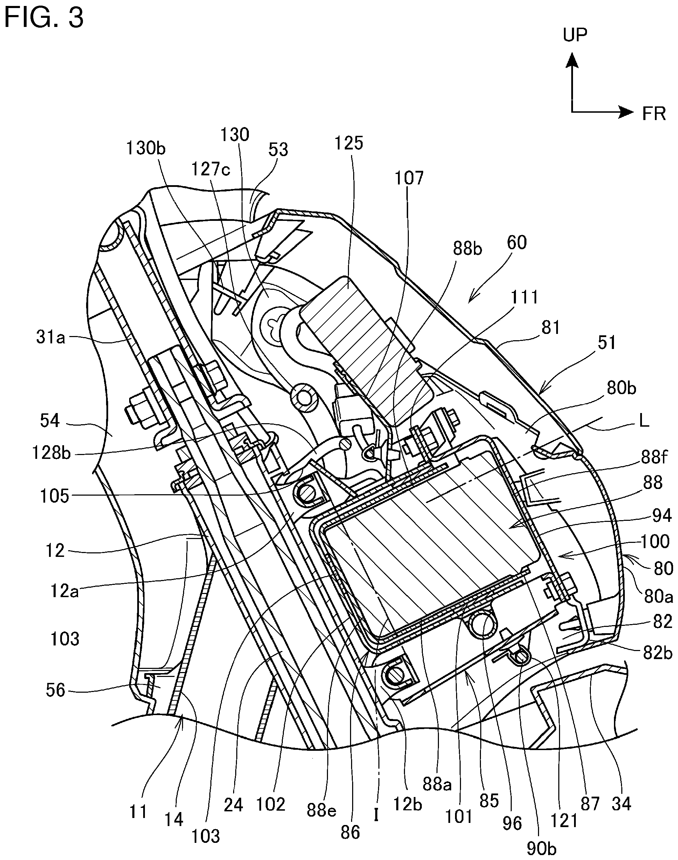

The front fork 13 is configured by a steering stem 24 (see Fig. 3) turnably supported by the head pipe 12, a bottom bridge 25 attached to a lower end of the steering stem 24 and shock absorber parts 26 (only the shock absorber part 26 on this side is shown) attached to both right and left ends of the bottom bridge 25. A handlebar 31 is attached to an upper end of the steering stem 24 and the front wheel 33 is supported via an axle 32 by lower ends of the right and left shock absorber parts 26. As for the handlebar 31, a handlebar stem 31a extended downward is coupled to an upper end of the steering stem 24. The head pipe 12 is inclined backward in accordance with a caster angle.

The front wheel 33 is covered with a front fender 34 attached to the front fork 13 from the upside and a pair of right and left fork guards 30 (only the fork guard 30 on this side is shown) that protect the front fork 13 are attached to the front fender 34.

The power unit 21 is configured by an engine 35 that forms the front and a continuously variable transmission 36 integrated with the rear of the engine 35. In the engine 35, a cylinder body provided with a cylinder head, a cylinder block and others is extended substantially forward from a crankcase 37 and an intake device including an air cleaner 38 is connected to the cylinder head. The continuously variable transmission 36 is provided with a transmission case 39 integrated with a rear end of the crankcase 37 and the rear wheel 43 is attached to a rear end of the transmission case 39 via an output shaft 42. A rear cushion unit 45 is laid between one rear frame 17 and the transmission case 39.

The seat 46 is openably/closably attached to an upper part of the housing box 22. A fuel tank 27 is provided at the back of the housing box 22.

The body cover 23 is provided with a front cover 51 that covers the front side of an upper part of the front fork 13, a pair of right and left front lower covers 52 (only the front lower cover 52 on this side is shown) connected to lower ends of the front cover 51, a handlebar cover 53 that covers the center of the handlebar 31, a front inner cover 54 that covers the rear side of the head pipe 12, a leg shield 56 which covers the rear side of the upper part of the front fork 13, which is connected to right and left ends of the front cover 51 and which covers the front sides of the rider's (occupant) legs, the floor step 57 which is extended downward and backward from a lower end of the leg shield 56 and which functions as a footrest for a rider, a pair of right and left floor side skirts 58 (only the floor side skirt 58 on this side is shown) extended downward from right and left edges of the floor step 57 and a pair of right and left rear side skirts 59 (only the rear side skirt 59 on this side is shown) connected to rear ends of the these floor side skirts 58.

Further, the body cover 23 is provided with a center cover 61 extended to the downside of a front end of the seat 46 from a rear end of the floor step 57, a pair of right and left body side covers 62 (only the body side cover 62 on this side is shown) extended to the rear side of the vehicle body on the downside of a side edge of the seat 46 from the floor step 57 and the center cover 61, a rear center cover 63 that covers rear ends of the right and left side covers 62 at the back of the seat 46, a pair of right and left body lower covers 64 (only the body lower cover 64 on this side is shown) extended backward from the rear end of the floor step 57 along lower edges of the right and left body side covers 62 and a pair of right and left rear side covers 66 (only the rear side cover 66 on this side is shown) connected to lower edges of rear ends of the body side covers 62.

The housing box 22 is covered with the center cover 61 from the front side and the sides of the housing box are covered with the fronts of the right and left body side covers 62. The sides of the fuel tank 27 are covered with the rears of the right and left body side covers 62.

The seat 46 is integrally provided with a front seat 46a for a rider to be seated and a rear seat 46b for a pillion passenger formed to be higher than the front seat 46a by one step. A folding type step 28 for an occupant for the pillion passenger seated on the rear seat 46b to put his/her foot is provided at a lower end of the body lower cover 64. Besides, the front of the rear wheel 43 is covered with a rear fender on the front side 29 from the upside.

As for the handlebar cover 53, a headlight 71 is provided to the front, a windshield 72 is provided to an upper part, and a pair of right and left rearview mirrors 73 (only the rearview mirror 73 on this side is shown) is provided to right and left ends. A folding type side kickstand 75 is provided to the left lower frame 16 and a main kickstand 76 is provided on the downside of the crankcase 37.

A blinker 74 (a lamp) is integrated with the front cover 51. A grab rail 77 for the pillion passenger to grab is provided at the back of the seat 46 and a luggage box 78 is attached to the rear of the grab rail 77. The rear wheel 43 is covered with a rear fender 79 from the upside and a license plate is provided to the rear fender 79. A tail lamp 69 is provided at the back of the rear side cover 66.

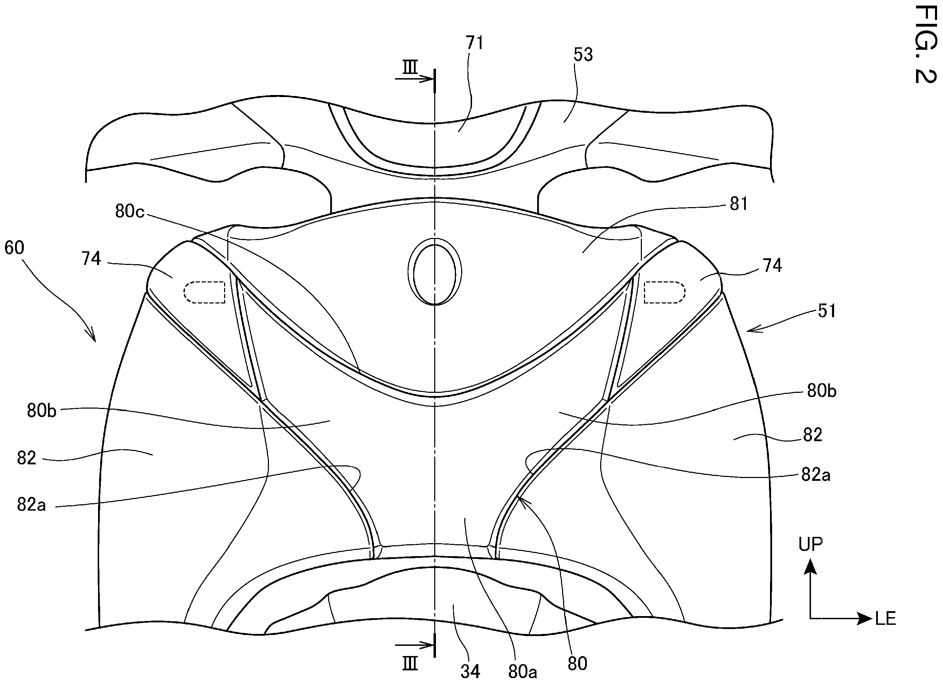

Fig. 2 is a front view showing the front of the vehicle viewed from the front side. Fig. 3 is a sectional view taken along line III-III in Fig. 2.

As shown in Figs. 2 and 3, the front cover 51 is a curved cover the center in a direction of vehicle width of which is protruded forward. The front cover 51 is provided with a front cover part 80 that covers the head pipe 12 from the front side, a front upper cover part 81 which connects with an upper edge of the front cover part 80 and which covers the handlebar stem 31a from the front side, a pair of right and left side cover parts 82 which are extended backward and downward from right and left edges of the front cover part 80 and which cover the front side of the down frame 14 from each side and the pair of right and left blinkers 74 coupled to right and left edges of the front cover part 80 and the front upper cover part 81.

The fore cover 60 that covers the head pipe 12 from a circumference is provided with the front cover 51, the leg shield 56 coupled to a peripheral edge of the front cover 51 and located on the rear side of the head pipe 12 and the front inner cover 54.

The front cover part 80 is provided with the center 80a that covers a lower part of the head pipe 12 from the front side and extended parts 80b extended diagonally upward from the center 80a to the sides of right and left shoulders of the front cover 51 in a front view, and an upper edge 80c of the front cover part 80 is formed in a curve the center of which is protruded downward.

The front upper cover part 81 is a substantially triangular cover in a front view having a lower edge along the upper edge 80c and protruded downward and is located on the downside of the headlight 71.

Each side cover part 82 is provided with an upper edge part 82a extended to the sides of the right and left shoulders of the front cover 51 diagonally upward along a lower edge of the extended part 80b, is extended downward from the upper edge part 82a, and is coupled to a front end of the front lower cover 52 through the side of the head pipe 12.

Right and left ends of the extended parts 80b are located inside right and left ends of the front upper cover part 81 and right and left ends of the upper edges 82a of the side cover parts 82 and space is formed in the right and left shoulders of the front cover 51. The blinkers 74 are embedded in the space and are integrated with the front cover 51.

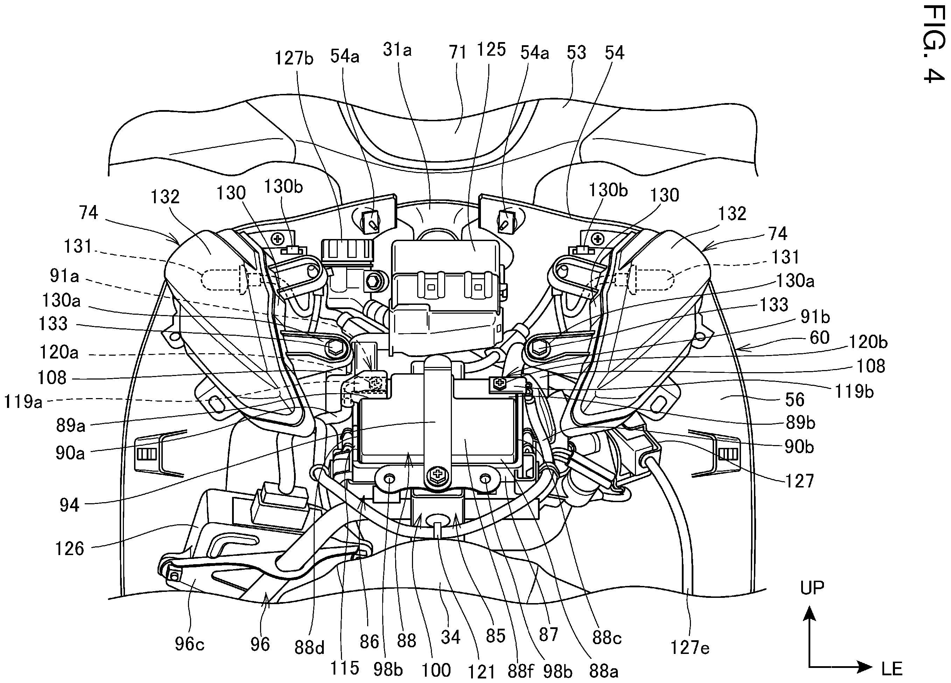

Fig. 4 is a front view showing structure inside the fore cover 60. In Fig. 4, a state in which the front cover 51 is removed is shown.

As shown in Figs. 3 and 4, a battery stay 85 extended forward from the head pipe 12 is provided to a front face of the head pipe 12 inside the fore cover 60 and a cage type battery surrounding stay 86 is supported by a top face of the battery stay 85. A resin battery box 87 is arranged in the battery surrounding stay 86 and a battery 88 that supplies power to an electric system of the vehicle is supported by the battery stay 85 in a state in which the battery is housed in the battery box 87.

The battery stay 85 and the battery surrounding stay 86 are integrated and configure a battery support 100 that supports the battery 88.

Stays on the head pipe side 12a, 12b protruded forward are provided to an upper part and a lower part of the front face of the head pipe 12. The battery support 100 is fixed to the head pipe 12 via the stays on the head pipe side 12a, 12b.

The battery 88 is formed in a substantial rectangular parallelopiped and is provided with a bottom face 88a opposite to the battery stay 85, a top face 88b substantially parallel to the bottom face 88a, a left face 88c, a right face 88d, a back face 88e and a front face 88f exposed in the fore cover 60.

The battery 88 is formed to be longer in the width, and the bottom face 88a and the top face 88b out of the six outside faces have the large area.

The battery 88 is provided with recess parts 89a, 89b for connection hollowed backward at right and left ends of an upper part of the front face 88f, and a plus terminal 91a (a battery terminal) and a minus terminal 91b (a battery terminal) to which electric wires 90a, 90b are respectively connected are provided to the recess parts 89a, 89b for connection.

The battery 88 is fixed the battery box 87 by a tabular battery fixture 94 that presses the front face 88f.

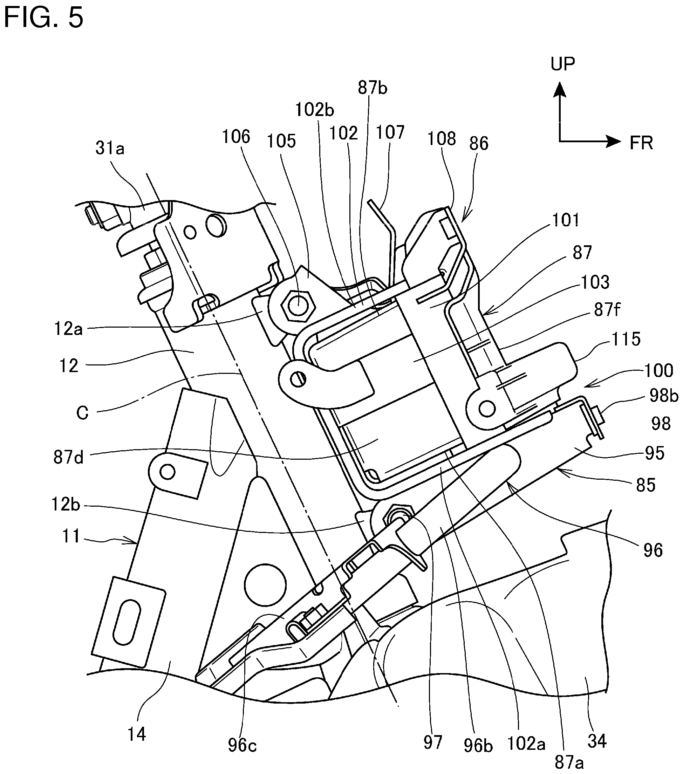

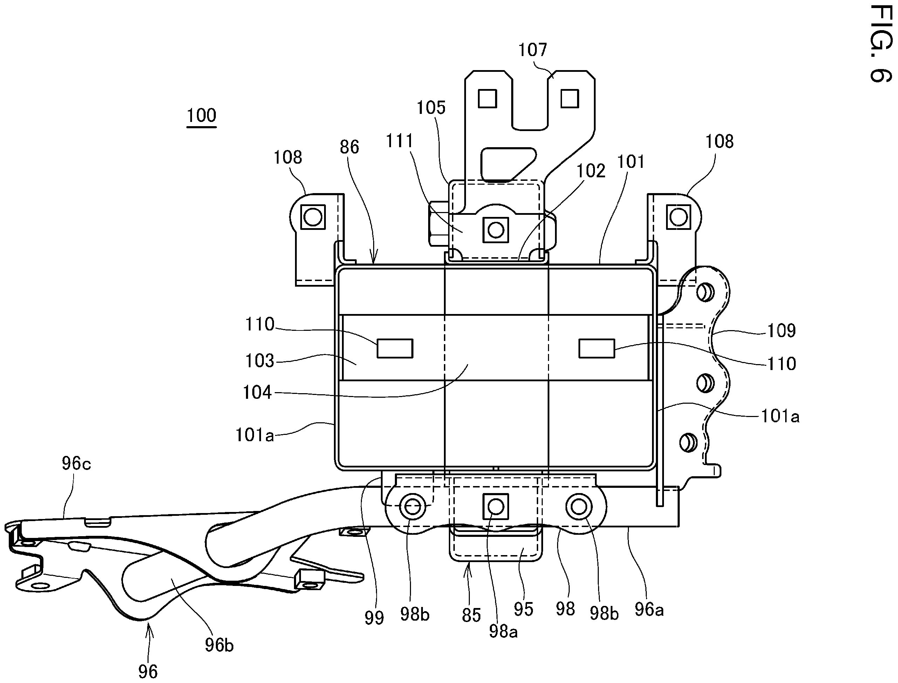

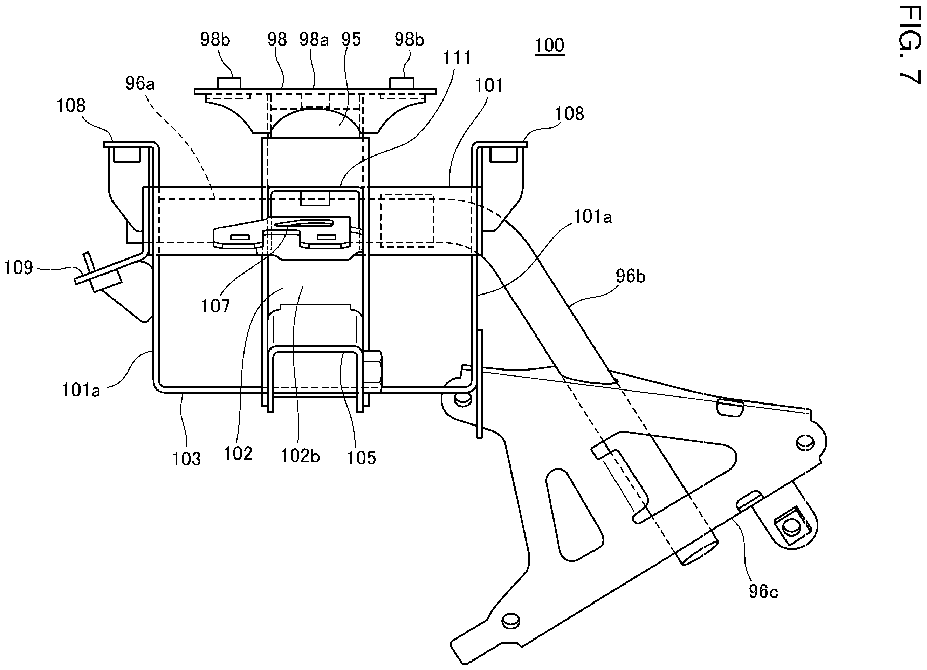

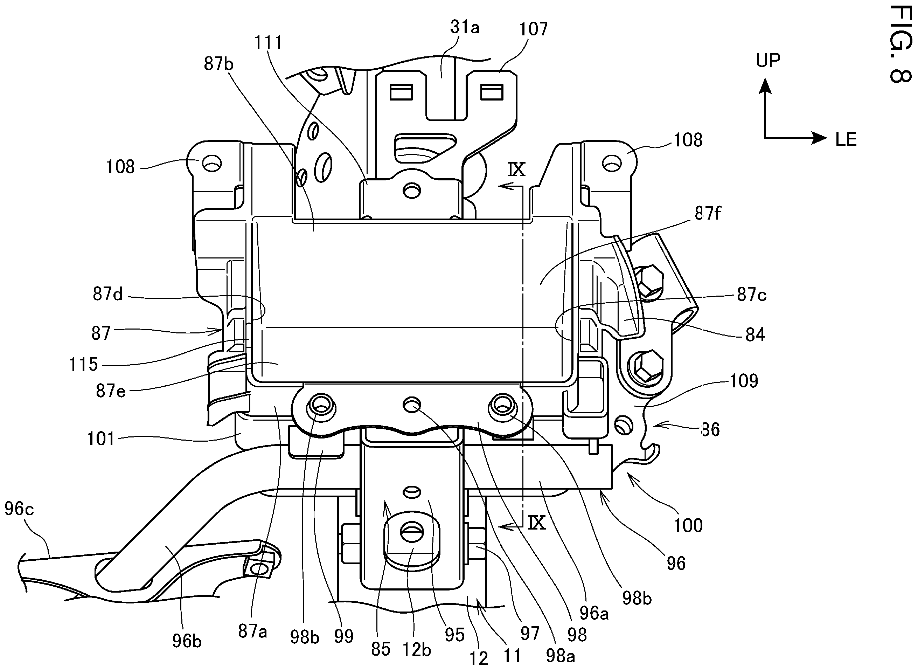

Fig. 5 is a right side view showing a state in which the battery support 100 is attached to the head pipe 12. Fig. 6 is a front view showing only the battery support 100. Fig. 7 is a plan view showing the battery support 100 viewed from the upside. Fig. 8 is a front view showing a state in which the battery support 100 is attached to the head pipe 12. In Figs. 5 and 8, states in which the battery box 87 is set are shown.

As shown in Figs. 5 to 8, the battery stay 85 is provided with a stay main body 95 inclined at an angle substantially perpendicular to an axis C of the head pipe 12 with the front higher and extended forward and a part 96 extended in the direction of vehicle width which is provided at an angle substantially perpendicular to the stay main body 95 and which is extended with the part piercing the stay main body 95 in the direction of vehicle width.

The stay main body 95 is a channel the section of which is U-shaped and is arranged in such a direction that an open part is directed upward. The stay main body 95 is fastened to the stay on the head pipe side 12b by a fixing bolt 97 inserted at its rear end. A stay plate 98 extended on both sides in the direction of vehicle width is provided to a front end of the stay main body 95. The stay plate 98 is provided with a fixing hole 98a to which a lower end of the battery fixture 94 is fixed in the center and is provided with a pair of cover fixing holes 98b to which each side cover part 82 (see Fig. 2) is fixed at right and left ends.

The part 96 extended in the direction of vehicle width is provided with a horizontal part 96a which pierces the side of an intermediate part in a longitudinal direction of the stay main body 95 and a bent part 96b bent from a right end of the horizontal part 96a and extended to the side of the head pipe 12 with the rear lower, and a platelike electric equipment stay 96c is provided to a rear end of the bent part 96b. Both ends of the horizontal part 96a are located on the downsides of right and left ends of the battery surrounding stay 86.

The battery surrounding stay 86 is provided with a frame part 101 acquired by forming a band plate to be a rectangular frame in a front view (see Fig. 6), a vertically coupling plate 102 acquired by forming a band plate in a U shape open forward in a side view (see Fig. 5) and a laterally coupling plate 103 acquired by forming a band plate in a U shape open forward in a top view (see Fig. 7).

The battery surrounding stay 86 is formed in the shape of a cage by connecting intermediate parts in its lateral direction of the frame part 101 to a pair of front ends of the vertically coupling plate 102 and connecting a pair of front ends of the laterally coupling plate 103 to intermediate parts in its vertical direction of the frame part 101. The laterally coupling plate 103 and the vertically coupling plate 102 are connected at an intersection part 104 on the rear face. The vertically coupling plate 102 is located in the center in the direction of vehicle width in front of the head pipe 12.

A reinforcing plate 99 coupled to the horizontal part 96a of the part 96 extended in the direction of vehicle width is provided to the bottom face of the frame part 101 on the side close to the bent part 96b. As the frame part 101 can be reinforced with the reinforcing plate 99, rigidity for supporting the battery 88 is increased.

The battery surrounding stay 86 is integrated with the battery stay 85 by connecting the bottom face part 102a of the vertically coupling plate 102 to a top face of the stay main body 95.

A fixing part on the surrounding stay side 105 protruded upward is provided to the rear of a top face part 102b of the vertically coupling plate 102 and the fixing part on the surrounding stay side 105 is fastened to the stay on the head pipe side 12a by a fixing bolt 106 inserted into the fixing part on the surrounding stay side 105.

A platelike upper electric equipment stay 107 protruded upward is provided to an intermediate part in its longitudinal direction of the top face part 102b of the vertically coupling plate 102.

A fixture stay 111 to which an upper end of the battery fixture 94 is fixed is provided to a front end of the top face part 102b of the vertically coupling plate 102.

A pair of blinker stays 108 protruded upward from the top face of the frame part 101 is provided to upper parts of right and left side plate parts 101a of the frame part 101 of the battery surrounding stay 86.

Besides, a platelike braking unit stay 109 protruded sideway is provided to the left side plate part 101a of the frame part 101.

A pair of battery box locking holes 110 (see Fig. 6) that pierce the laterally coupling plate 103 is formed on the right and left sides of the intersection part 104 on the rear face of the laterally coupling plate 103.

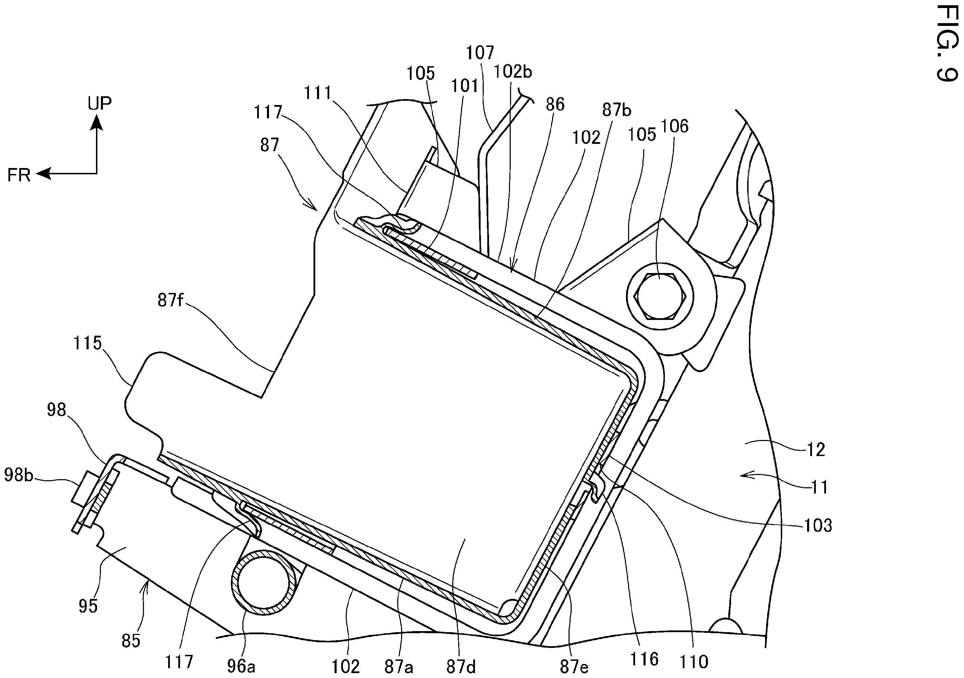

Fig. 9 is a sectional view viewed along a line IX-IX in Fig. 8.

As shown in Figs. 5, 8 and 9, the battery box 87 is formed in a box type in which one side of a front face is open and is provided with a lower wall part 87a that faces the top face of the battery stay 85, an upper wall part 87b substantially parallel to the lower wall part 87a, a left wall part 87c, a right wall part 87d, a rear wall part 87e and a battery insertion opening 87f open forward.

A harness guide part 84 that guides the electric wire 90b (see Fig. 4) is formed on the upside of a front edge of an outside face of the left wall part 87c of the battery box 87.

A platelike wrong assembly preventing protrusion 115 (a protruded wall) protruded forward is formed on the downside of a front edge of the right wall part 87d of the battery box 87.

As shown in Fig. 9, a pair of claw parts 116 engaged with the battery box locking hole 110 of the battery surrounding stay 86 is formed on a rear face of the rear wall part 87e of the battery box 87. Besides, plural claw parts 117 protruded backward are formed at a front edge of a top face of the upper wall part 87b and in the front of a bottom face of the lower wall part 87a.

The battery box 87 is pushed into the battery surrounding stay 86 from the opening at the front of the battery surrounding stay 86. When the battery box 87 is pushed into the depth of the battery surrounding stay 86, the claw part 116 is engaged with the battery box locking hole 110, each claw part 117 is engaged with each front edge of an upper part and a lower part of the frame part 101, and the battery box is fixed to the battery surrounding stay 86. The battery box 87 is fixed in a state in which the lower wall part 87a and the upper wall part 87b are substantially parallel to the top face of the battery stay 85. Besides, the battery 88 is detached from the battery box 87 by pulling out it forward. That is, the attachment/detachment of the battery 88 is made along the battery stay 85 in its longitudinal direction.

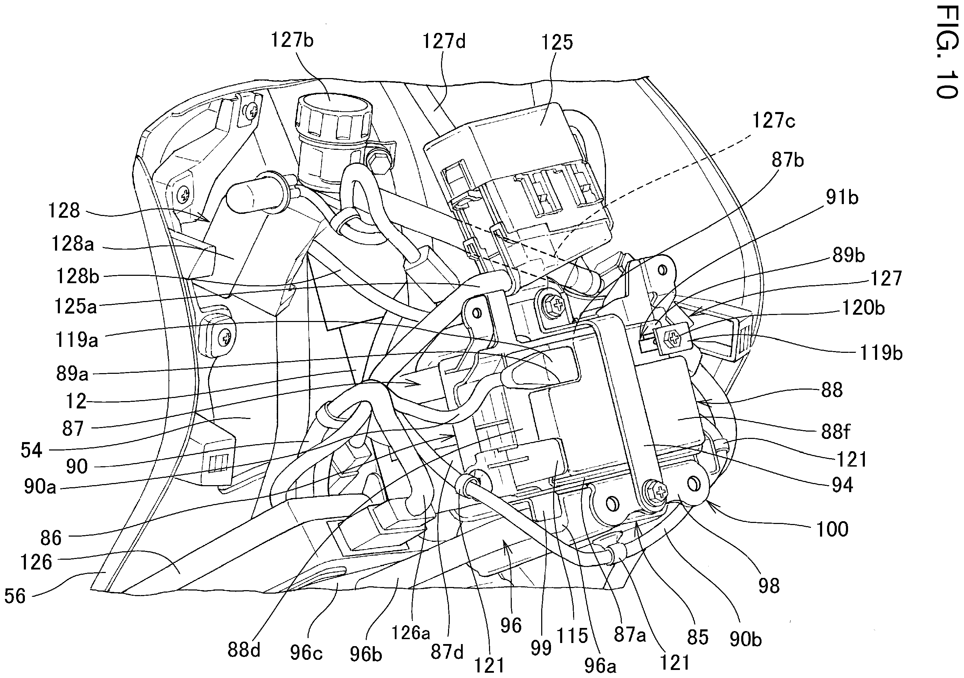

Fig. 10 is a perspective view showing the structure inside the fore cover 60. In Fig. 10, a state in which the front cover 51 is removed is shown.

Referring to Figs. 3, 4 and 10, the battery 88 is housed in the battery box 87 so that the front face 88f is exposed from the battery insertion opening 87f of the battery box 87 forward and the recess parts 89a, 89b for connection are close to the upper wall part 87b of the battery box 87. The length in its longitudinal direction of the battery 88 is formed to be longer than the depth of the battery box 87, and the front face 88f and the bottom faces of the recess parts 89a, 89b for connection are located in front of a front edge of the battery insertion opening 87f. The wrong assembly preventing protrusion 115 is protruded in front of the front face 88f and the bottom faces of the recess parts 89a, 89b for connection. The wrong assembly preventing protrusion 115 is protruded in front of the front face 88f and the bottom faces of the recess parts 89a, 89b for connection.

The recess parts 89a, 89b for connection are hollows formed in right and left corners of an upper part of the front face 88f of the battery 88 and are open forward, sideways and upward. The plus terminal 91a and the minus terminal 91b (see Fig. 4) respectively extended forward substantially perpendicularly to the front face 88f are provided to the bottom faces of the recess parts 89a, 89b for connection. Detailedly, the plus terminal 91a and the minus terminal 91b are provided with a terminal main body (not shown) extended inside the battery 88 and bolts 120a, 120b respectively as a fixture connected to the terminal main body.

Each electric wire 90a, 90b is provided with each platelike connecting terminal part 119a, 119b, the electric wires are fixed to the plus terminal 91a and the minus terminal 91b by the bolts 120a, 120b inserted into the connecting terminals, and they are extracted on the lateral sides of the battery 88. Each connecting terminal part 119a, 119b is provided with a cover that covers each connecting terminal part 119a, 119b; however, in this embodiment, as to the connecting terminal 119b, a state in which the cover is removed is shown.

The electric wires 90a, 90b are attached/detached in directions of axes L (see Fig. 3) of the plus terminal 91a and the minus terminal 91b, that is, in a longitudinal direction inclined in substantially parallel with the top face of the battery stay 85.

The electric wires 90a, 90b are connected to the battery 88 in a state in which the battery is housed in the battery box 87; however, when the battery 88 is housed in a wrong direction in which the upside and the downside are reverse, that is, in a direction in which the recess parts 89a, 89b for connection are close to the lower wall part 87a of the battery box 87, the wrong assembly preventing protrusion 115 obstructs and the electric wire 90a cannot be connected to the plus terminal 91a. Therefore, the wrong assembly of the battery 88 can be prevented with simple configuration and the battery can be connected in correct polarity. Besides, to prevent a short circuit, work for attachment is performed from the side of the plus terminal 91a; however, as the wrong assembly preventing protrusion 115 is provided on the side of the plus terminal 91a, wrong assembly can be found at an early stage.

The battery 88 is fixed because the vertically extended battery fixture 94 is fastened to the fixing hole 98a and the fixture stay 111.

The electric wire 90b connected to the minus terminal 91b is guided along the harness guide part 84 (see Fig. 8) of the battery box 87, is extended downward, is bent on the downside of the left wall part 87c, and is wired on the downside of the battery stay 85 and then, outside the right wall part 87d. The electric wire 90b is supported by each support part 121 provided to outside faces of the left wall part 87c and the right wall part 87d and a bottom face of the battery stay 85.

The electric wire 90a connected to the plus terminal 91a is integrated with the electric wire 90b on the lateral side of the rear of the right wall part 87d of the battery box 87 to be one main harness 90 and the main harness 90 is extended to the rear of the vehicle along the body frame 11.

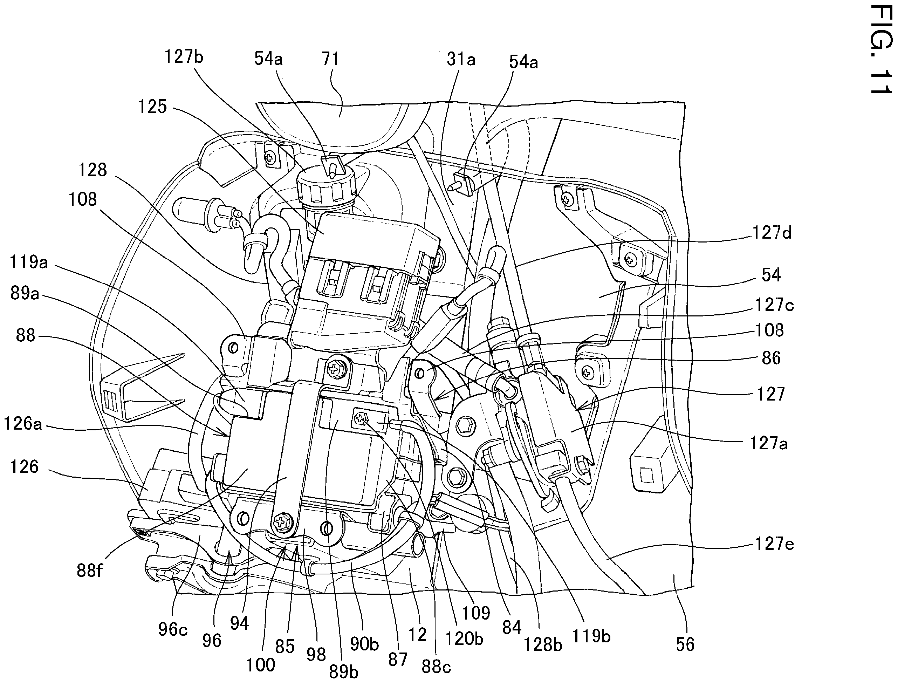

Fig. 11 is a perspective view showing the structure inside the fore cover 60. In Fig. 11, a state in which the front cover 51 is removed is shown.

As shown in Figs. 10 and 11, a fuse box 125 for an electric component is provided over the battery 88 inside the fore cover 60, ECU 126 (an accessory) that controls each part of the vehicle is provided on the right side (on one side) of the battery 88, and a braking unit 127 that brakes the motorcycle 10 is provided on the left side (on the other side) of the battery 88. Besides, a seat locking device 128 for operating the locking of a locking mechanism (not shown) in opening/closing the seat 46 is provided to the front inner cover 54 and a box type main body 128a of the seat locking device 128 is provided to an inner face of the front inner cover 54 on the right side of the head pipe 12 inside the fore cover 60.

As shown in Figs. 3 and 10, the fuse box 125 is supported by a front face of the upper electric equipment stay 107 of the battery surrounding stay 86 and is located immediately above the battery 88 in posture in which the fuse box is inclined backward along the inclination of the head pipe 12. The wiring 125a of the fuse box 125 is extracted rightward and downward from a lower part of the right side of the fuse box 125 to the side of the main harness 90 and is integrated with the main harness 90.

The ECU 126 is fixed to a top face of the electric equipment stay 96c of the part 96 extended in the direction of vehicle width extended on the right side from the battery stay 85 in posture in which the ECU is inclined backward on the lateral side of the head pipe 12. The wiring 126a of the ECU 126 is bent backward and upward from a front face of the wiring 126a of the ECU 126 and is integrated with the main harness 90. As described above, as the ECU 126 is provided to the electric equipment stay 96c provided to the bent part 96b to which the part 96 extended in the direction of vehicle width for supporting the battery 88 is extended, the ECU 126 can be supported with simple structure. Besides, rigidity for supporting the ECU 126 can be also increased by the reinforcing plate 99 provided to the horizontal part 96a in addition to the rigidity for supporting the battery 88.

As shown in Figs. 10 and 11, the braking unit 127 is a unit that brakes the front wheel 33 and the rear wheel 43 in synchronization by operating a brake operating lever (not shown) provided to the handlebar 31 (see Fig. 1), and is provided with a braking unit main body 127a for synchronization, a reservoir tank 127b which is arranged in a higher position than the braking unit main body 127a and which stores brake oil for the braking unit main body 127a, a brake hose 127c that connects the reservoir tank 127b and the braking unit main body 127a, a cable 127d that connects the brake operating level to the braking unit main body 127a and a cable 127e for a rear wheel extended on the side of the rear wheel 43.

The braking unit main body 127a is fixed to a front face of the braking unit stay 109 of the battery surrounding stay 86.

The reservoir tank 127b is arranged in the right front of the handlebar stem 31a and at the right back of the fuse box 125 and is fixed to a stay (not shown) provided to the head pipe 12. The brake hose 127c is passed among the reservoir tank 127b, the upper electric equipment stay 107 and the head pipe 12 (see Fig. 3), is extended leftward and downward, and is connected to the braking unit main body 127a. Therefore, the brake hose 127c can be protected by the upper electric equipment stay 107.

An operating cable (a seat locking cable) 128b wired to the rear of the vehicle toward the side of the seat 46 is connected to the main body 128a of the seat locking device 128. The operating cable 128b is extracted from the front face of the main body 128a, is gently bent, reaches the left side of the vehicle body on the reverse side between the upper electric equipment stay 107 and the head pipe 12 (see Fig. 3), and is wired to the rear of the vehicle along the left side of the body frame 11. As described above, as the operating cable 128b is wired at gentle curvature, a load in operating the operating cable 128b can be reduced.

In this embodiment, as the electric wires 90a, 90b and the battery 88 are attached/detached in the longitudinal direction, space for attaching/detaching the electric wires 90a, 90b and the battery 88 is not required to be secured on the upside of the battery 88. Therefore, the fuse box 125, the brake hose 127c, the reservoir tank 127b and the operating cable 128b can be arranged on the upside of the battery 88. Hereby, the fuse box 125 can be arranged close to the battery 88 and the maintainability of the electric equipment is satisfactory. Besides, as the brake hose 127c and the operating cable 128b are not required to make a detour, the brake hose 127c and the operating cable 128b can be reduced. In addition, as the braking unit main body 127a can be also arranged in a high position by arranging the reservoir tank 127b on the upside of the battery 88 and the braking unit main body 127a and the brake lever are brought close, the cable 127d can be reduced.

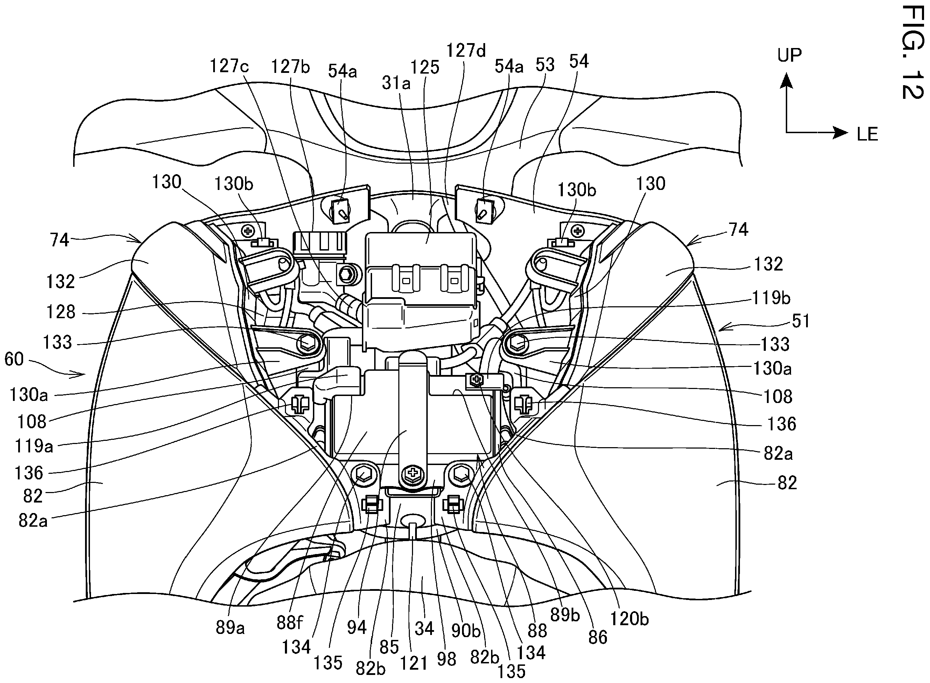

Fig. 12 is a front view showing the structure inside the fore cover 60. In Fig. 12, a state in which the front cover part 80 and the front upper cover part 81 are removed is shown.

As shown in Figs. 4 and 12, each blinker 74 is provided with a blinker main body 130 arranged inside the fore cover 60, a bulb 131 as a light emitting part arranged in the blinker main body 130 and a lens part 132 that covers the bulb 131 and forms a part of an outside surface of the fore cover 60. Each blinker 74 is arranged outside the right and left sides of the battery 88.

A stay part 130a protruded toward the center in the direction of vehicle width is formed on an inner face of the front of the blinker main body 130. The front of the blinker 74 is fixed to the battery surrounding stay 86 by fastening the stay part 130a to the blinker stay 108 of the battery surrounding stay 86 by a bolt 133 inserted from the front side. As described above, as the blinker 74 is fixed to the battery surrounding stay 86, the blinker 74 can be fixed with simple structure.

Besides, a locking part 130b to which the front upper cover part 81 (see Fig. 2) is locked is formed on a front face of the rear of the blinker main body 130.

A cover stay part 82b protruded toward the center in the direction of vehicle width is formed in the front of the upper edge part 82a of each side cover part 82. The front of the side cover part 82 is fastened to the cover fixing hole 98b of the battery stay 85 by a bolt 134 inserted into the cover stay part 82b from the front side. The front cover part 80 (see Fig. 2) is fixed to the side cover part 82 by a locking part 135 provided on the cover stay part 82b and provided on the downside of the bolt 134 and a locking part 136 provided on the upper edge part 82a and provided on the upside of the cover stay part 82b.

The front upper cover part 81 is fixed by the locking part 130b of the blinker main body 130 and a locking part 54a provided at a front edge of an upper part of the front inner cover 54.

In the maintenance of the battery 88, when the front cover part 80 and the front upper cover part 81 are removed, the front face 88f of the battery 88, the connecting terminal parts 119a, 119b of the electric wires 90a, 90b, the fuse box 125 and others are exposed forward. As the side cover parts 82 are located outside the front face 88f of the battery 88, the side cover parts 82 are not required to be removed.

When the connecting terminal parts 119a, 119b are removed, the bolts 120a, 120b are removed in the direction of the axis L (see Fig. 3) and the connecting terminal parts 119a, 119b have only to be pulled out forward. As described above, as the connecting terminal parts 119a, 119b are exposed forward, can be detached/attached utilizing large space in front of the battery 88 and the other parts do not obstruct, workability is satisfactory.

Further, in the removal of the battery 88, as the battery 88 has only to be pulled out forward on the diagonal upside along the top face of the battery stay 85 and the parts located on the upside of the battery 88 do not obstruct, work for detaching/attaching the battery 88 is easy. Furthermore, as space on the upside of the battery 88 is not restricted by the detachment/attachment of the battery 88, parts such as the fuse box 125 can be arranged effectively utilizing the space on the upside of the battery 88.

Furthermore, as the battery 88 is supported by the battery stay 85 which is directed forward on the diagonal upside, the battery 88 never naturally falls in the maintenance and workability is satisfactory.

Furthermore, as the bottom face 88a having the largest area of the battery 88 is supported by the battery stay 85 via the battery box 87 and the battery surrounding stay 86, the rigidity for supporting the battery 88 can be increased.

Further, as shown in a side view in Fig. 3, a rear face of the battery surrounding stay 86 and the rear wall part 87e of the battery box 87 are arranged closer to the side of the front face of the head pipe 12 than an imaginary line I that connects front ends of the stays on the head pipe side 12a, 12b and they are located between the upper stay on the head pipe side 12a and the lower stay on the head pipe side 12b. The battery 88 housed in the battery box 87 is arranged with the rear crossing the imaginary line I and its rear face 88e is located closer to the side of the head pipe 12 than the imaginary line I. As described above, a forward overhang of the front cover 51 can be reduced by arranging the battery 88 as close to the side of the front face of the head pipe 12 as possible and the front cover 51 can be compactified. Furthermore, as the battery 88 can be arranged closer to the center in the longitudinal direction of the vehicle, the center of gravity of the vehicle can be brought close to the center in the longitudinal direction and maneuverability can be enhanced.

As described above, according to the embodiment to which the present invention is applied, as the battery 88 is arranged in a state in which the plus terminal 91a and the minus terminal 91b respectively provided in front of the head pipe 12 and inside the fore cover 60 are directed on the front side and the plus terminal 91a and minus terminal 91b are also detached or attached from the front side, the configuration space on the upside of the battery 88 is not restricted by the detachability of the plus terminal 91a and the minus terminal 91b. Therefore, the space on the upside of the battery 88 can be effectively utilized.

Besides, as the battery 88 is formed in a rectangular parallelopiped, the bottom face 88a has the largest area and the battery stay 85 which is provided to the head pipe 12 and which supports the bottom face 88a and the bottom face 88a of the battery 88 are formed substantially in parallel, the bottom face 88a having the largest area of the battery 88 can be supported by the battery stay 85 and the rigidity for supporting the battery 88 can be increased.

In addition, as the plus terminal 91a and the minus terminal 91b are formed in the upper part of the battery 88, workability in the detachment/attachment of the plus terminal 91a and minus terminal 91b is satisfactory.

Further, a degree of freedom in a shape of the battery surrounding stay 86 can be enhanced utilizing the configuration space secured on the upside of the battery 88 and the blinker 74 can be fixed to the battery surrounding stay 86. Therefore, a stay and others dedicated to the blinker 74 are not required and the number of parts can be reduced.

Furthermore, as the fuse box 125 is arranged immediately above the top face 88b of the battery 88, the fuse box 125 can be also easily maintained together with the maintenance of the battery 88.

Furthermore, as the brake hose 127c and the operating cable 128b for opening/closing the seat 46 for the occupant are arranged on the upside of the battery 88, the brake hose 127c and the operating cable 128b can be reduced.

Further, as the resin battery box 87 which houses the battery 88 is provided inside the battery surrounding stay 86, the plus terminal 91a is arranged in the corner on the upside of the front face 88f of the battery 88 and the wrong assembly preventing protrusion 115 protruded forward is formed in the part of the battery box 87 adjacent to the corner on the downside of the battery 88, the wrong assembly preventing protrusion 115 obstructs when the insertion in a reverse direction of the battery 88 is tried. Therefore, the wrong assembly of the battery 88 can be prevented with simple configuration.

Furthermore, as the battery stay 85 is provided with the part 96 extended in the direction of vehicle width, the part 96 extended in the direction of vehicle width supports at least a part in the direction of vehicle width of the bottom face 88a of the battery 88 and the ECU 126 is fixed to the electric equipment stay 96c on the side of its free end, the rigidity for supporting the battery 88 can be increased utilizing the part 96 extended in the direction of vehicle width that supports the ECU 126 and the number of parts can be reduced.

Furthermore, as the stays on the head pipe side 12a, 12b which are provided to the head pipe 12 and which support the battery 88 are arranged with the stays apart in a vertical direction of the battery 88 and in the side view, the battery 88 is arranged so that the battery crosses the imaginary line I that connects the front ends of the upper and lower stays on the head pipe side 12a, 12b, the battery 88 can be arranged close to the head pipe 12. Therefore, the front cover 51 can be compactified, the center of gravity of the motorcycle 10 can be brought close to the central side in the longitudinal direction, and the maneuverability of the vehicle can be enhanced.

The above-mentioned embodiment is one embodiment to which the present invention is applied and the present invention is not limited to the embodiment.

In the embodiment, it is described that the plus terminal 91a and the minus terminal 91b are provided to the corners on the upside of the front face 88f of the battery 88; however, the present invention is not limited to this, and for example, a plus terminal 91a and a minus terminal 91b are provided to corners on the downside of a front face 88f of a battery 88 and a wrong assembly preventing protrusion may be also provided to a corner on the upside of a battery box 87.

### [Reference Signs List]

- 10: Motorcycle (Saddle-ride type vehicle)
- 11: Body frame
- 12: Head pipe
- 12a, 12b: Stay on head pipe side (Stay)
- 33: Front wheel
- 46: Seat
- 60: Fore cover
- 74: Blinker (Lamp)
- 85: Battery stay
- 86: Battery surrounding stay
- 87: Battery box
- 88: Battery
- 88a: Bottom face
- 88b: Top face
- 91a: Plus terminal (Battery terminal)
- 91b: Minus terminal (Battery terminal)
- 96: Part extended in direction of vehicle width
- 115: Wrong assembly preventing protrusion (Protruded wall)
- 125: Fuse box
- 126: ECU (Accessory)
- 127c: Brake hose
- 128b: Operating cable (Seat locking cable)

## Claims

1. Layout structure for a saddle-ride type vehicle, and the layout structure comprising:
a head pipe (12) that forms the front of a body frame (11) and steerably journals a front wheel (33);
a fore cover (60) that covers a circumference of the head pipe (12); and
a battery (88) provided in front of the head pipe (12) and inside the fore cover (60),
wherein the battery (88) is arranged in a state in which battery terminals (91a, 91b) face forward,
**characterized in that** a fuse box (125) is arranged immediately above a top face (88b) of the battery (88).

2. Layout structure for the saddle-ride type vehicle according to Claim 1,
wherein: the battery (88) is formed in a rectangular parallelopiped a bottom face (88a) of which has the largest area; and
a battery stay (85) which is provided to the head pipe (12) and which supports the bottom face (88a) and the bottom face (88a) of the battery (88) are formed in substantial parallel.

3. Layout structure for the saddle-ride type vehicle according to Claim 1 or 2, wherein the battery terminals (91a, 91b) are formed in an upper part of the battery (88).

4. Layout structure for the saddle-ride type vehicle according to any of Claims 1 to 3,
wherein: the battery (88) is supported by a battery surrounding stay (86) that covers a circumference of the battery (88); and
a lamp (74) is fixed to the battery surrounding stay (86).

5. Layout structure for the saddle-ride type vehicle according to any of Claims 1 to 4, wherein a brake hose (127c) and a seat locking cable (128b) for opening/closing a seat (46) for an occupant are arranged on the upside of the battery (88).

6. Layout structure for the saddle-ride type vehicle according to Claim 4,
wherein: a resin battery box (87) which houses the battery (88) is provided inside the battery surrounding stay (86);
the plus terminal (91a) of the battery terminals (91a, 91b) is arranged in a corner of a front face of the battery (88) on one side in a vertical direction; and
a protruded wall (115) protruded forward is formed in a part of the battery box adjacent to a corner of the battery (88) on the other side in the vertical direction.

7. Layout structure for the saddle-ride type vehicle according to Claim 2,
wherein: the battery stay (85) is provided with a part (96) extended in a direction of vehicle width;
the part (96) extended in the direction of vehicle width supports at least a part in a direction of vehicle width of the bottom face (88a) of the battery (88); and
an accessory (126) is fixed to the side of its free end.

8. Layout structure for the saddle-ride type vehicle according to any of Claims 2 to 7,
wherein: stays (12a, 12b) which are provided to the head pipe (12) and which support the battery (88) are arranged with the stays apart in a vertical direction of the battery (88); and
in a side view, the battery (88) is arranged with the battery crossing an imaginary line (I) that connects front ends of the upper and lower stays (12a, 12b).

## Patentansprüche

1. Gestaltungsstruktur für ein Fahrzeug vom Sattelfahr-Typ, und wobei die Gestaltungsstruktur umfasst:
ein Kopfrohr (12), welches die Front eines Körperrahmens (11) bildet und lenkbar ein Vorderrad (33) trägt;
eine Vorderabdeckung (60), welche einen Umfang des Kopfrohrs (12) bedeckt; und
eine Batterie (88), welche vor dem Kopfrohr (12) und innerhalb der Vorderabdeckung (60) bereitgestellt ist,
wobei die Batterie (88) in einem Zustand angeordnet ist, in welchem Batterieanschlüsse (91 a, 91 b) nach vorne weisen,
**dadurch gekennzeichnet, dass** ein Sicherungskasten (125) unmittelbar oberhalb einer oberen Fläche (88b) der Batterie (88) angeordnet ist.

2. Gestaltungsstruktur für das Fahrzeug vom Sattelfahr-Typ nach Anspruch 1,
wobei die Batterie (88) in einem Parallelepipeden gebildet ist, von welchem eine untere Fläche (88a) den größten Flächeninhalt aufweist; und eine Batteriestrebe (85), welche an dem Kopfrohr (12) bereitgestellt ist und welche die untere Fläche (88a) trägt, und die untere Fläche (88a) der Batterie (88) im Wesentlichen parallel gebildet sind.

3. Gestaltungsstruktur für das Fahrzeug vom Sattelfahr-Typ nach Anspruch 1 oder 2, wobei die Batterieanschlüsse (91 a, 91 b) in einem oberen Teil der Batterie (88) gebildet sind.

4. Gestaltungsstruktur für das Fahrzeug vom Sattelfahr-Typ nach einem der Ansprüche 1 bis 3,
wobei die Batterie (88) von einer Batterie-Umgebungsstrebe (86) getragen ist, welche einen Umfang der Batterie (88) bedeckt; und
eine Lampe (74) an der Batterie-Umgebungsstrebe (86) befestigt ist.

5. Gestaltungsstruktur für das Fahrzeug vom Sattelfahr-Typ nach einem der Ansprüche 1 bis 4, wobei ein Bremsschlauch (127c) und ein Sitz-Verriegelungskabel (128b) zum Öffnen/Schließen eines Sitzes (46) für einen Fahrer an der Oberseite der Batterie (88) angeordnet sind.

6. Gestaltungsstruktur für das Fahrzeug vom Sattelfahr-Typ nach Anspruch 4,
wobei eine Harz-Batteriebox (87), welche die Batterie (88) aufnimmt, innerhalb der Batterie-Umgebungsstrebe (86) bereitgestellt ist;
der Plus-Anschluss (91 a) der Batterieanschlüsse (91 a, 91 b) in einer Ecke einer Vorderfläche der Batterie (88) an einer Seite in einer vertikalen Richtung angeordnet ist; und
eine vorstehende Wand (115), welche nach vorne vorsteht, in einem Teil der Batteriebox benachbart zu einer Ecke der Batterie (88) an der anderen Seite in der vertikalen Richtung gebildet ist.

7. Gestaltungsstruktur für das Fahrzeug vom Sattelfahr-Typ nach Anspruch 2,
wobei die Batteriestrebe (85) mit einem Teil (96) bereitgestellt ist, welches in einer Richtung der Fahrzeugbreite verlängert ist;
das in der Richtung der Fahrzeugbreite verlängerte Teil (96) in einer Richtung der Fahrzeugbreite wenigstens einen Teil der unteren Fläche (88a) der Batterie (88) trägt; und
ein Zubehör (126) an der Seite seines freien Endes befestigt ist.

8. Gestaltungsstruktur für das Fahrzeug vom Sattelfahr-Typ nach einem der Ansprüche 2 bis 7,
wobei Streben (12a, 12b), welche an dem Kopfrohr (12) bereitgestellt sind und welche die Batterie (88) tragen, mit den Streben in einer vertikalen Richtung der Batterie (88) beabstandet angeordnet sind; und
in einer Seitenansicht die Batterie (88) so angeordnet ist, dass die Batterie eine imaginäre Linie (I) kreuzt, welche vordere Enden der unteren und oberen Streben (12a, 12b) verbindet.

## Revendications

1. Structure d'agencement pour un véhicule de type à selle, la structure d'agencement comprenant :
un tube avant (12) qui forme l'avant d'un châssis de carrosserie (11) et qui supporte de manière orientable une roue avant (33) ;
un capot avant (60) qui recouvre une circonférence du tube avant (12) ; et
une batterie (88) prévue à l'avant du tube avant (12) et à l'intérieur du capot avant (60),
dans laquelle la batterie (88) est agencée dans un état dans lequel les bornes de batterie (91a, 91b) sont orientées vers l'avant,
**caractérisée en ce qu'**un boîtier de fusibles (125) est agencé immédiatement au-dessus d'une face supérieure (88b) de la batterie (88).

2. Structure d'agencement pour le véhicule de type à selle selon la revendication 1,
dans laquelle : la batterie (88) est réalisée en une forme de parallélépipède rectangle dont une face inférieure (88a) a l'aire la plus grande ; et
un support de batterie (85) qui est prévu sur le tube avant (12) et qui supporte la face inférieure (88a) et la face inférieure (88a) de la batterie (88) sont formés de manière sensiblement parallèles.

3. Structure d'agencement pour le véhicule de type à selle selon la revendication 1 ou 2, dans laquelle les bornes de batterie (91a, 91b) sont formées dans une partie supérieure de la batterie (88).

4. Structure d'agencement pour le véhicule de type à selle selon l'une quelconque des revendications 1 à 3,
dans laquelle : la batterie (88) est supportée par un support entourant la batterie (86) qui recouvre une circonférence de la batterie (88) ; et
une lampe (74) est fixée au support entourant la batterie (86).

5. Structure d'agencement pour le véhicule de type à selle selon l'une quelconque des revendications 1 à 4, dans laquelle un tuyau de frein (127c) et un câble de verrouillage de siège (128b) pour ouvrir/fermer un siège (46) pour un occupant sont agencés au-dessus de la batterie (88).

6. Structure d'agencement pour le véhicule de type à selle selon la revendication 4,
dans laquelle : un boîtier de batterie en résine (87) qui loge la batterie (88) est prévu à l'intérieur du support entourant la batterie (86) ;
la borne plus (91a) des bornes de batterie (91a, 91b) est agencée dans un coin d'une face avant de la batterie (88) d'un côté dans la direction verticale ; et
une paroi saillante (115) faisant saillie vers l'avant est formée dans une partie du boîtier de batterie adjacente à un coin de la batterie (88) de l'autre côté dans la direction verticale.

7. Structure d'agencement pour le véhicule de type à selle selon la revendication 2,
dans laquelle : le support de batterie (85) est pourvu d'une partie (96) s'étendant dans une direction de largeur du véhicule ;
la partie (96) s'étendant dans la direction de largeur du véhicule supporte au moins une partie dans une direction de largeur du véhicule de la face inférieure (88a) de la batterie (88) ; et
un accessoire (126) est fixé au côté de son extrémité libre.

8. Structure d'agencement pour le véhicule de type à selle selon l'une quelconque des revendications 2 à 7,
dans laquelle : les supports (12a, 12b) qui sont prévus sur le tube avant (12) et qui supportent la batterie (88) sont agencés de manière à ce que les supports soient espacés dans la direction verticale de la batterie (88) ; et
en vue latérale, la batterie (88) est agencée avec la batterie croisant une ligne imaginaire (I) qui relie les extrémités avant des supports supérieur et inférieur (12a, 12b).
